# EUROPÄISCHE PATENTSCHRIFT

(11) **EP 0 938 646 B1**
(45) Veröffentlichungstag und Bekanntmachung des Hinweises auf die Patenterteilung: **19.09.2001**
(21) Anmeldenummer: 97951083.1
(22) Anmeldetag: 14.11.1997
(51) Int. Cl.: G01D 5/14, G01D 5/16, G01B 7/30, G01P 3/487

(54) **ANORDNUNGEN ZUM ERFASSEN EINER ROTATORISCHEN ODER TRANSLATORISCHEN BEWEGUNG**
ARRANGEMENTS FOR DETECTING A ROTATIONAL OR TRANSLATORY MOVEMENT
SYSTEMES POUR DETECTER UN MOUVEMENT ROTATIF OU TRANSLATOIRE

(30) Priorität: 14.11.1996 DE 19648662; 11.01.1997 DE 19701927
(43) Veröffentlichungstag der Anmeldung: 01.09.1999
(73) Patentinhaber: Brose Fahrzeugteile GmbH & Co. KG, 96450 Coburg (DE)
(72) Erfinder: NEUMANN, Jürgen, D-96237 Ebersdorf (DE); JÜRJENS, Gerhard, D-96450 Coburg (DE)
(74) Vertreter: Müller, Wolfram Hubertus, Dipl.-Phys.
(86) Internationale Anmeldenummer: DE9702717
(87) Internationale Veröffentlichungsnummer: WO9821552

(56) Entgegenhaltungen:
- EP-A- 0 151 002
- DE-A- 3 543 603
- DE-A- 4 113 880
- DE-A- 4 125 482
- US-A- 4 507 591
- US-A- 5 089 817
- US-A- 5 517 112

## Beschreibung

Die Erfindung betrifft Anordnungen zum Erfassen einer rotatorischen oder translatorischen Bewegung nach dem Oberbegriff der Ansprüche 1 und 2.

Es sind Anordnungen bekannt, bei denen die Drehzahl und die Drehrichtung eines Drehantriebes mittels zweier um 90° versetzter Hallsensoren ermittelt werden. Dazu wird zentrisch auf der Drehantriebsachse ein mit dieser drehfest verbundener N-S magnetisierter Ringmagnet angeordnet. Bei Rotation des Ringmagneten werden die beiden seitlich des Ringmagneten angeordneten Hallsensoren jeweils von einem veränderlichen Magnetfeld durchsetzt. Die an den beiden Sensoren dabei auftretenden Magnetfeldänderungen werden mittels Schwellwertschalter in zwei um 90° zueinander versetzte binäre Impulsfolgen umgesetzt. Durch Zählen der Impulsanzahl pro Zeiteinheit kann die Drehzahl und durch Vergleich der beiden Impulsfolgen die Drehrichtung des Drehantriebes bestimmt werden.

Nachteilig sind bei dieser Anordnung zur Erfassung der Drehzahl und Drehrichtung zwei Sensoren erforderlich. Damit verbunden ist wegen der notwendigen exakten Positionierung der zwei Sensoren untereinander und bzgl. der Drehachse eine aufwendige Konstruktion. Auch ist eine kostenintensive Kontaktierung und Verbindung der beiden Hallsensoren erforderlich.

Aus der DE 42 33 549 A1 ist eine Vorrichtung zum Erfassen der Drehzahl und der Drehrichtung eines Drehantriebes bekannt, die ein mit dem Drehantrieb drehfest verbundenes, magnetisches signalgebendes Element aufweist. Bei Rotation des signalgebenden Elements entsteht ein drehrichtungscodiertes Magnetfeld, das von einem Sensor erfaßt und einer elektronischen Auswerteinheit zugeführt wird. Da bei Rotation des signalgebenden Elements ein drehrichtungscodiertes Magnetfeld entsteht, ist zu einer Drehrichtungserkennung lediglich ein Sensor erforderlich. Eine Drehrichtungscodierung erfolgt beispielsweise durch eine exzentrische Rotation eines Ringmagneten um die Drehantriebsachse oder durch eine Codierung des Magnetfeldes des Ringmagneten.

Nachteilig an der bekannten Vorrichtung ist, daß zur Drehrichtungserkennung eine Codierung des magnetischen Feldes erforderlich ist. Einfach herzustellende und billige symmetrische Ringmagnete in zentrischer Anordnung können daher nicht verwendet werden.

Aus der DE 44 23 461 A1 ist ein Volumeter zur Bestimmung des Durchflußvolumens einer Flüssigkeit durch einen Volumeterkörper bekannt, bei der auf einer Schraubenspindel drehstarr ein Polrad angeordnet ist, dem eine Sensoranordnung mit einem Sensor zugeordnet ist. Bei Drehen der magnetischen Polschuhe des Polrades entsteht am Sensor ein asymmetrisches Magnetfeld, das eine Drehrichtungserkennung ermöglicht. Bei dieser Vorrichtung wird ebenfalls ein drehrichtungscodiertes magnetisches Feld erzeugt.

Die DE 35 43 603 A1 beschreibt einen Stellungsdetektor mit einer ferromagnetischen Feldplattenbaueinheit, die unter einen Winkel gegenüber einem mehrpoligen Ringmagneten angeordnet ist. Auf der Feldplattenbaueinheit ist ein Sensor zum Erfassen des magnetischen Streufeldes des Ringmagneten angeordnet. Aufgrund der Neigung der Feldplattenbaueinheit ist der Sensor ebenfalls geneigt angeordnet, jedoch ist nicht beschrieben, daß in irgendeiner Weise drehrichtungsabhängige Signale ausgewertet werden.

Aus der DE 41 25 482 A1 ist ein Drehmeldesystem mit einem Ringmagneten und zwei in Umfangsrichtung der Drehachse versetzt zueinander auf einem gemeinsamen Sensorträger angeordneten Magnetfeld-Sensorelementen bekannt. Die beiden Sensorelemente sind mit einer zueinander parallelen Anordnung ihrer Meßachsen auf einer Montagefläche befestigt, die gegenüber der Drehachse des Magnetelementes schräg geneigt verläuft.

Die DE 41 13 880 A1 beschreibt die Realisierung eines fest vorgegebenen Phasenwinkelabstandes von Meßsignalen, die um 90° zueinander verschoben sind. Zwei Hallelemente sind dazu auf einem einstückigen Sensorträger fest montiert, und zwar auf zwei winklig zueinander angeordneten Montageflächen.

Aus der EP 151 002 A2 ist eine Anordnung bekannt, bei der sich das magnetfelderzeugende Teil am Sensorelement befindet. Eine Verkippung des Sensorelementes erfolgt, um ein bestimmtes, für eine Messung günstiges Magnetfeld am Sensorelement einzustellen, nicht jedoch zur Erfassung eines drehrichtungsabhängigen Signals.

Der Stand der Technik zeichnet sich somit dadurch aus, daß zur Drehrichtungserkennung entweder zwei Sensoren eingesetzt werden oder eine Codierung des magnetischen Feldes erfolgt.

Weiter ist es bekannt, zur Bestimmung der Geschwindigkeit einer Translationsbewegung zwischen zwei Teilen eines Aggregats das eine Aggregatteil mit einem sich in Längsrichtung erstreckenden, symmetrischen Magneten und das andere Aggregatteil mit einem Hallsensor zu versehen, so daß bei einer Relativbewegung der Aggregatteile der Hallsensor sich parallel zu dem Magneten bewegt und dabei von den magnetischen Feldlinien des Magneten durchsetzt wird. Nachteilig ist es bei einer derartigen Anordnung nicht möglich, auch die Bewegungsrichtung zwischen den Aggregatteilen zu ermitteln.

Der Erfindung liegt die Aufgabe zu Grunde, eine einfache Anordnung zum Erfassen einer rotatorischen oder translatorischen Bewegung zwischen einem symmetrisch aufgebauten Magneten und einem magnetischen Semsorelement zur Verfügung zu stellen, wobei die Feldstärkeänderungen des Magneten auf das Sensorelement, z.B. ein Hallelement, einwirken. Die Anordnung soll eine sichere Erfassung der rotatorischen oder translatorischen Bewegung mit nur einem Sensorelement gewährleisten, wobei eine Bewegungsumkehr innerhalb einer Signalperiode detektierbar sein soll.

Diese Aufgabe wird erfindungsgemäß durch eine Anordnung mit den Merkmalen des Anspruchs 1 und eine Anordnung mit den Merkmalen des Anspruchs 2 gelöst. Vorteilhafte und bevorzugte Ausgestaltungen der Erfindung sind in den abhängigen Ansprüchen angegeben.

Die erfindungsgemäße Lösung ermöglicht durch eine spezielle Ausrichtung eines analogen, magnetosensitiven Sensorelements eine Richtungscodierung mit nur einem Sensorelement. Die erfindungsgemäße Lösung sieht ein bewußtes Verkippen oder Verschieben des Sensorelements im Vergleich zu einer transversalen Lage des Sensorelements bezüglich des Signalerzeugungselements vor. Hierdurch entstehen veränderte Signale mit zusätzlichem Informationswert, die zur sicheren Erfassung der rotatorischen oder translatorischen Bewegung ausgewertet werden. Dadurch, daß das Sensorelement Signalimpulse erzeugt, die zwischen ihren Flanken einen von der Drehrichtung abhängigen, ansteigenden oder abfallenden Signalverlauf besitzen, so daß bei einer Bewegungsrichtungsumkehr sich das Vorzeichen des Signalverlaufs ändert, kann insbesondere eine Richtungsumkehr mit hoher Genauigkeit ausgewertet werden.

Unter einer transversalen Ausrichtung des Sensorelements wird eine Ausrichtung verstanden, in der der Normalvektor der sensitiven Fläche des Sensorelements senkrecht auf die Achse des Signalerzeugungselements zeigt. Eine transversale Lage des Sensorelements in Bezug auf das Signalerzeugungselement bzw. dessen Achse wird bei allen im Stand der Technik bekannten Anordnungen zum Erfassen einer translatorischen oder rotatorischen Bewegung verwendet, da in dieser Ausrichtung die wirksame Komponente des Magnetfelds und dementsprechend auch das erzeugte Signal am größten ist. Das Signal ist bei einer transversalen Ausrichtung des Sensorelements jedoch nicht nur maximal, sondern auch symmetrisch, so daß im Signal keine Richtungsinformationen enthalten sind.

Die vorliegende Erfindung sieht dagegen vor, daß der Normalvektor des Sensorelements nicht senkrecht auf die Achse des Signalerzeugungselements zeigt. Dies bewirkt, daß sich bei einer relativen Bewegung zwischen dem Signalerzeugungselement und dem Sensorelement je nach Bewegungsrichtung ein Ansteigen oder Abfallen des gemessenen magnetischen Feldes ergibt, abhängig von der jeweiligen am Sensorelement anliegenden transversalen Komponente des Vektors der magnetischen Feldstärke.

Die erfindungsgemäße Lösung ermöglicht insbesondere eine exakte Bestimmung einer Richtungsumkehr, da nur bei einer Richtungsumkehr ein symmetrisches Signal entsteht. Dies hat die Ursache darin, daß aufgrund der Abweichung des Sensorelements von der transversalen Lage das während eines Rechts- oder Linkslaufes erzeugte Signal nicht symmetrisch ist, sondern ansteigt oder abfällt. Dieser ansteigende bzw. abfallende Verlauf des Signals erfährt bei einer Bewegungsumkehr ebenfalls eine Umkehr, so daß ein Maximum bzw. Minimum der magnetischen Feldstärke entsteht, das in einer angeschlossenen Auswerteinheit leicht erfaßbar ist und den genauen Punkt der Richtungsumkehr angibt.

Des weiteren ermöglicht die erfindungsgemäße Lösung die Erfassung von Geschwindigkeitsänderungen, also Beschleunigungen innerhalb eines durch einen N- oder S-magnetisierten Bereich des Signalerzeugungselements erzeugten Impulses. So ändert sich bei einer auftretenden Beschleunigung die Form des im Sensorelement erzeugten Strom- oder Spannungssignals, insbesondere ist die Ableitung des Signals nicht konstant.

In einer ersten Variante der Erfindung erfolgt die Erfassung einer rotatorischen Bewegung. Eine entsprechende Anordnung zum Erfassen des Drehwinkels, der Drehzahl und/oder der Drehrichtung eines Drehantriebes weist ein Signalerzeugungselement auf, das drehfest mit der Drehachse des Drehantriebs verbundenen ist. Diesem ist ein analoges, magnetosensitives Sensorelement zugeordent, wobei der Normalverktor der sensitiven Fläche des Sensorelements erfindungsgemäß einen Winkel zu einem vom Sensorelement auf die Drehachse des Signalerzeugungselements zeigenden Vektor aufweist.

In einer bevorzugten Ausgestaltung dieser Variante ist das Sensorelement um eine Achse verkippt, die parallel zur Drehachse verläuft. Dabei ist der Normalvektor der sensitiven Fläche des Sensorelements bevorzugt in einer Ebene senkrecht zur Drehachse angeordnet. Es erfolgt bei dieser Ausführungsform ein Verkippen des Sensorelements bezüglich einer transversale Lage zur Drehachse.

In einer alternativen Ausführungsform ist das Sensorelement von einer Transversallage zur Drehachse des Signalerzeugungselements seitlich versetzt. Hier erfolgt somit kein Verkippen, sondern ein seitliches Verschieben des Sensorelements. Das Ergebnis ist identisch, da im Sensorelement ebenfalls kein symmetrisches Signal mehr erzeugt wird.

Als Signalerzeugungselement wird bevorzugt ein Ringmagnet oder eine Magnetscheibe verwendet. Zur Erzeugung eines symmetrischen, periodischen Magnetfeldes weist der Ringmagnet bzw. die Magnetscheibe entlang seines bzw. ihres Umfangs Segmente unterschiedlicher magnetischer Polarität N, S auf. Die einzelnen Sektoren sind gleichmäßig angeordnet und weisen eine identische Größe auf.

Als magnetosensitives Sensorelement wird bevorzugt ein Hallsensor verwendet. Das Halbleiterplättchen des Hallsensors stellt dabei die sensitive Fläche des Sensorelements dar, die gemäß der Erfindung ausgerichtet wird. Bei senkrechtem Auftreffen der Magnetfeldlinien auf das Halbleiterplättchen wird ein maximales Signal erzeugt.

Da bei der vorliegenden Erfindung unter anderem der nicht symmetrische Spannungsverlauf der einzelnen Impulse des erzeugten analogen Spannungsignals ausgewertet wird, erfolgt eine Auswertung des Signals bevorzugt vor einer Umwandlung des analogen Signals in ein digitales Signal. Andernfalls kann nur die Drehzahl, nicht jedoch die Drehrichtung ermittelt werden. Ein Schwellwertschalter zur Erzeugung eines digitalen Signals ist daher bevorzugt erst in der Auswerteinheit vorgesehen. Jedoch ist es auch denkbar, daß sowohl eine erste Auswerteinrichtung als auch ein Schwellwertschalter bereits im Sensorelement integriert sind.

In einer zweiten Variante der Erfindung wird eine translatorische Bewegung erfaßt. Dabei erstreckt sich das Signalerzeugungselement bevorzugt in Längsrichtung und weist alternierend Segmente unterschiedlicher magnetischer Polarität N, S auf. Der Normalvektor der sensitiven Fläche des dem Signalerzeugungselement zugeordneten Sensorelements weist einen Winkel zu einem vom Sensorelement senkrecht auf die Achse des Signalerzeugungselements zeigenden Vektor auf.

In einer bevorzugten Ausgestaltung dieser Variante der Erfindung ist das Signalerzeugungselement ein Stabmagnet oder ein Magnetband, das beispielsweise mit einem Aggregatteil verbunden ist.

Die Erfindung wird nachfolgend unter Bezugnahme auf die Figuren der Zeichnung anhand mehrerer Ausführungsbeispiele näher erläutert. Es zeigen
- Fig. 1: schematisch eine Anordnung zur Erfassung des Drehwinkels, der Drehzahl und/oder der Drehrichtung eines Drehantriebes;
- Fig. 2: einen Schnitt durch eine erfindungsgemäße Anordnung mit einem winklig angeordneten Hallsensor;
- Fig. 2a - 2b: schematisch die geometrischen Verhältnisse der Anordnung bei winklig und transversal angeordnetem Sensorelement;
- Fig. 3: einen Schnitt durch eine erfindungsgemäße Anordnung mit einem aus der transversalen Lage seitlich verschobenen Hallsensor;
- Fig. 4a - 4c: den Verlauf der magnetischen Feldstärke an einem Hallsensor über einen Winkelbereich von 720° bei einer Anordnung gemäß Fig. 2 oder 3 im Falle eines Rechtslaufs, eines Linkslaufs und eines Richtungswechsels;
- Fig. 5: den Verlauf der magnetischen Flußdichte an einem Hallsensor bei Auftreten einer Geschwindigkeitsänderung;
- Fig. 6: zur Erläuterung der der Erfindung zu Grunde liegenden Prinzipien den Spannungsverlauf am Sensorelement bei Bewegung eines winklig angeordneten Sensorelements im Magnetfeld eines Stabmagneten;
- Fig. 7a: schematisch eine Anordnung zum Erfassen einer translatorischen Bewegung zwischen einem sich in Längsrichtung erstreckenden Signalerzeugungselement und einem Hallsensor gemäß dem Stand der Technik und
- Fig. 7b: schematisch eine erfindungsgemäße Anordung zum Erfassen einer translatorischen Bewegung zwischen einem sich in Längsrichtung erstreckenden Signalerzeugungselement und einem Hallsensor

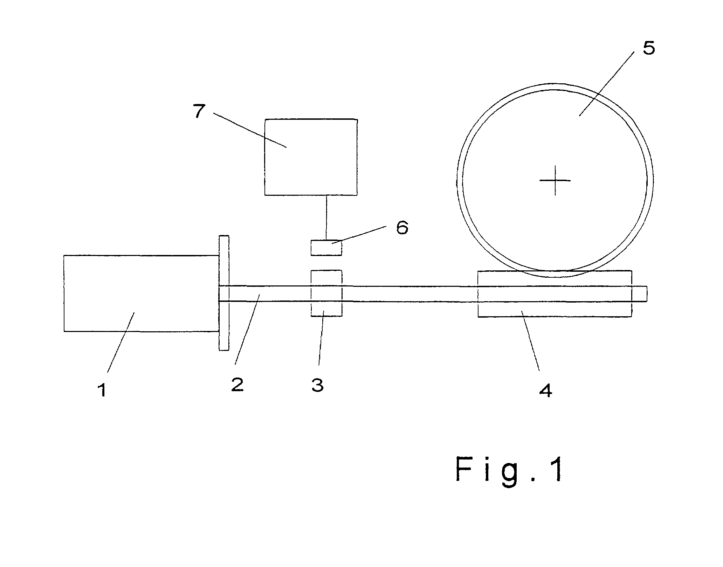

Figur 1 zeigt schematisch eine Anordnung zur Erfassung des Drehwinkels, der Drehzahl und/oder der Drehrichtung eines Drehantriebs 1. Auf der Drehachse 2 des Drehantriebs 1 ist ein als Signalerzeugungselement dienender Ringmagnet 3 drehfest und zentrisch angeordnet. Der Ringmagnet weist N-S magnetisierte Sektoren gleicher Größe auf. Die Befestigung des Ringmagneten 3 auf der Drehachse 2 erfolgt beispielsweise durch Aufkleben.

Dem Ringmagnet 3 ist ein Hallsensor 6 zugeordnet, der bei Rotation des Ringmagneten 3 eine Hallspannung erzeugt, die der am Hallsensor 6 anliegenden magnetischen Feldstärke proportional ist. Der Hallsensor 3 ist über eine Leitung mit einer Auswerteinheit 7 verbunden, der das erfaßte Spannungssignal zugeführt wird und die eine Signalauswertung vornimmt, wie nachfolgend im einzelnen erläutert werden wird.

Zur Umsetzung der Drehbewegung des Drehantriebes 1 in eine translatorische Bewegung ist ein Schneckengetriebe mit einer starr mit der Drehachse 2 verbundenen Schnecke 4 vorgesehen, die in ein Schneckenrad 5 eingreift. Das Schnekkenrad 5 ist mit einem nicht dargestellten Abtriebselement, etwa einer Seiltrommel oder einem Ritzel verbunden. Alternativ zu einem Schneckengetriebe können natürlich auch andere Getriebe verwendet werden.

Eine bevorzugte Anwendung liegt in einem Einsatz für Fensterheber und Schiebedächer in Kraftfahrzeugen. Die Periode einer Umdrehung des Drehantriebmotors liegt bei diesen Anwendungen typischerweise bei 14 bis 15 Millisekunden. Um einen störungsfreien Betrieb und insbesondere einen sicheren Einklemmschutz eines Fensterhebes gewährleisten zu können, ist es erforderlich, zu jedem Zeitpunkt genau den Drehwinkel, die Drahzahl und die Drehrichtung des Drehantriebs 1 zu erfassen. Über die Erfassung dieser Größen sind in eindeutiger Weise die Position und Bewegungsrichtung sowie dynamische Kenngrößen eines durch den Drehantrieb 1 angetriebenen Verstellobjektes, etwa einer elektrisch verstellbaren Fensterscheibe oder eines Schiebedachs erfaßbar. Dynamische Kenngrößen sind dabei Geschwindigkeits- und Beschleunigungwerte des Verstellobjektes.

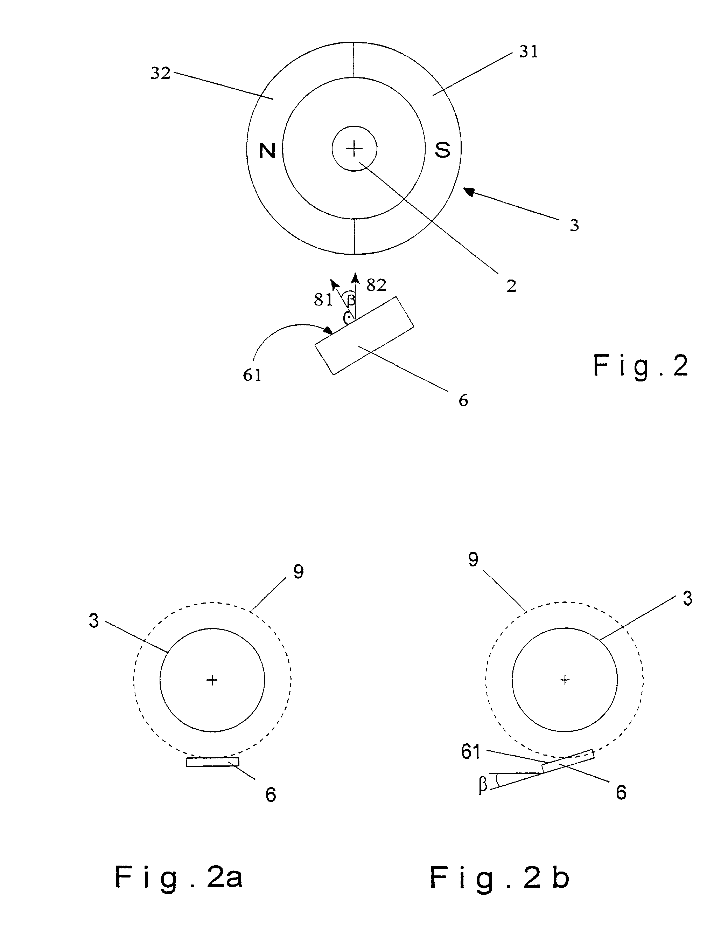

In Figur 2 ist eine erste Anordnung dargestellt, bei der mit nur einem Sensorelement neben der Drehzahl auch der Drehwinkel, die Drehrichtung und insbesondere eine exakte Richtungsumkehr ermittelbar sind.

Gemäß Figur 2 ist auf der Drehachse 2 ein N-S-magnetisierter permanentmagnetischer Ringmagnet 3 mit zwei gleichgroßen Sektoren 31, 32 unterschiedlicher Polarität N, S angeordnet.

Dem Ringmagnet 3 ist ein Hallsensor 6 zugeordnet. Der Hallsensor 6 besteht üblicherweise in an sich bekannter Weise aus einem rechteckigen, dünnen Halbleiterplättchen 61, das mit Elektroden (nicht dargestellt) versehen ist. Wird das Plättchen von den magnetischen Feldlinien des Ringmagneten 3 durchsetzt, so tritt zwischen den auf den Längsseiten des Halbleiterplättchens angebrachten Elektronen eine Hallspannung auf, die proportional zu der senkrecht auf dem Halbleiterplättchen stehenden Komponente des anliegenden Magnetfeld ist. Das Halbleiterplättchen 61 stellt dabei die sensitive Fläche des Sensorelements 6 dar. Bei Änderung der Magnetfeldrichtung wechselt das Vorzeichen der Hallspannung.

Der Hallsensor 6 ist in Bezug auf den Ringmagneten 3 bzw. dessen Drehachse 2 derart ausgerichtet, daß der senkrecht auf dem Halbleiterplättchen stehende Normalvektor 81 nicht wie bei bekannten Sensoranordnungen in Richtung der Drehachse 2 zeigt, sondern vielmehr winklig zu dem auf die Drehachse 2 zeigenden (gedachten) Vektor 82 angeordnet ist. Der Hallsensor 6 ist dabei um eine Achse verkippt, die im wesentlichen parallel zur Drehachse 2 verläuft, wobei der Normalvektor 81 der sensitiven Fläche 61 des Hallsensors 6 in der Ebene senkrecht zur Drehachse 2 liegt, in der sich auch der Ringmagnet 3 befindet.

Anders ausgedrückt ist der Hallsensor 6 derart ausgerichtet, daß die sensitive Fläche 61 des Sensors 6 eine Ausrichtung erfährt, die von einer tangentialen Lage an einen gedachten, um die Drehachse 2 gezogenen Kreis abweicht. Figuren 2a und 2b verdeutlicht diese Darstellungsweise der Anordnung des Hallsensors 6. In Fig. 2a ist das Sensorelement 6 gemäß der Stand der Technik transversal zum Ringmagneten 3 angeordnet und liegt daher tangential an einem gedachten Kreis 9 um die Drehachse 2 und den Ringmagneten 3 an. In Figur 2b wurde das Sensorelement 6 um den Winkel β verkippt, so daß die sensitive Fläche 61 nicht mehr tangential am Kreis 61 anliegt.

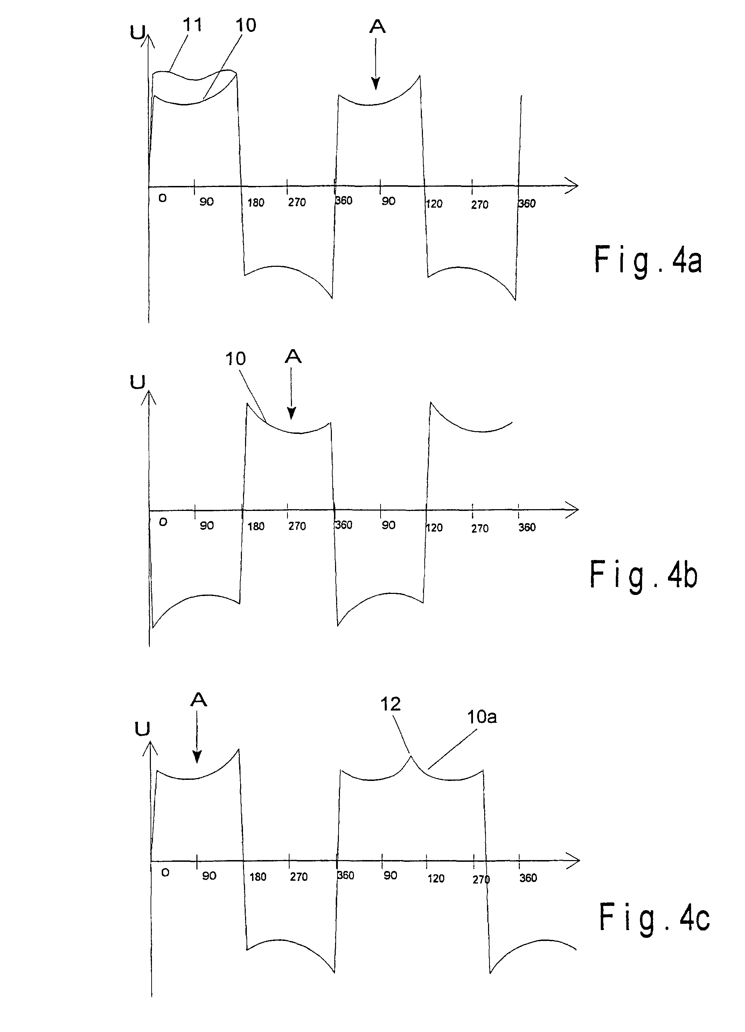

Durch die Ausrichtung des Hallsensors 6 abweichend von einer transversalen Lage wird bei einer Drehung der Ringmagneten 3 am Hallsensor ein Spannungsignal erzeugt, daß für jeden Sektor 31, 32 einen ansteigenden oder abfallenden Spannungsverlauf besitzt und daher nicht symmetrisch ist. Daher werden durch das erfaßte Signal neben der Drehzahl auch den Drehwinkel und die Drehrichtung codiert. Dies wird an den in den Figuren 4a bis 4c dargestellten Signalverläufen deutlich.

In den Figuren 4a bis 4c ist die bei der Anordnung gemäß Fig. 2 erzeugte Hallspannung U in Abhängigkeit vom Drehwinkel des Ringmagneten 3 dargestellt. Die Hallspannung U ist dabei proprtional der am Hallsensor 6 anliegenden magnetischen Feldstärke H.

Aufgrund der um den Winkel β gewinkelten Ausrichtung des Hallsensors 3 sind die Spannungsverläufe während des Vorbeistreichens eines Sektors 31, 32 des Ringmagneten 3, also vorliegend über einen Winkelbereich von 180°, nicht im wesentlichen konstant und symmetrisch, sondern steigen an bzw. fallen ab. Fig. 4a zeigt den Fall eines Rechtslaufes und Fig. 4b den Fall eines Linkslaufes.

Gemäß Fig. 4a, 4b weist die Hallspannung 10 sowohl bei Rechts- wie auch bei Linkslauf zu Beginn und am Ende eines durch einen vorbeistreichenden Sektor 31, 32 erzeugten Pulses A einen unterschiedlichen Wert auf. Zum Vergleich ist in Figur 4a für den Bereich bis 180° auch der Spannungsverlauf 11 bei Erfassung des Magnetfeldes durch einen in herkömmlicher Weise auf die Drehachse 2 ausgerichteten Hallsensor dargestellt. Hier sind die erfaßten Spannungswerte am Anfang und am Ende eines Pulses A identisch und der Spannungsverlauf symmetrisch.

Die durch den gewinkelt angeordneten Hallsensor 6 erfaßte Hallspannung U codiert, wie nachfolgend erläutert, den Drehwinkel, die Drehzahl, die Drehrichtung, einen Richtungswechsel sowie auftretende Drehgeschwindigkeitsänderungen in exakter Weise.

Zur Erfassung der Drehzahl werden die einzelnen Pulse A in an sich bekannter Weise mittels eines Schmitt-Triggers in eine digitale Zählimpulsfolge umgewandelt. Durch Zählen der einzelnen digitalen Impulse ergibt sich die Drehzahl. Die Anzahl der digitalen Impulse während eines bestimmten Zeitintervalls ergibt die mittlere Drehgeschwindigkeit während des betrachteten Zeitintervalls.

Eine Drehrichtungserkennung ist durch Auswertung des Spannungsverlaufs 10 innerhalb eines Pulses A möglich. Bei einer Drehrichtungsumkehr ändert sich das Vorzeichen, d.h. die Anstiegsrichtung des Spannungsverlaufs. Die Auswertung des Spannungsverlaufs erlaubt daher unmittelbar die Bestimmung der Drehrichtung. Innerhalb eines Spannungspulses A entspricht dabei jede Winkelstellung des Ringmagneten 3 einem bestimmten Spannungswert, so daß über den vorliegenden Spannungswert sehr genau der Drehwinkel erfaßbar ist. Natürlich erfolgt eine Auswertung des Spannungsverlaufs, bevor das analoge Signal in eine digitale Drehimpulsfolge umgewandelt wird, da dabei die Drehrichtungs- und Drehwinkelinformation verloren geht.

Fig. 4c zeigt den Fall eines Richtungswechsels der Drehbewegung. Bei einem Richtungswechsel - und nur dann - ergibt sich ein symmetrischer Signalverlauf 10a. So ist die am Hallsensor 6 anliegende magnetische Feldstärke und damit das erfaßte Spannungssignal nach einem Richtungswechsel spiegelbildlich bezüglich des Zeitpunktes des Richtungswechsels. Der Zeitpunkt eines Richtungswechsels kann sehr exakt dadurch erfaßt werden, daß das Maximum 12 bzw. Minimum des bei einem Richtungswechsel auftretenden symmetrischen Signals ermittelt wird. Aufgrund der asymmetrischen Spannungsverläufe innerhalb eines Pulses A tritt bei einem Richtungswechsel notwendigerweise immer ein Spannungsmaximum bzw. Minimum auf.

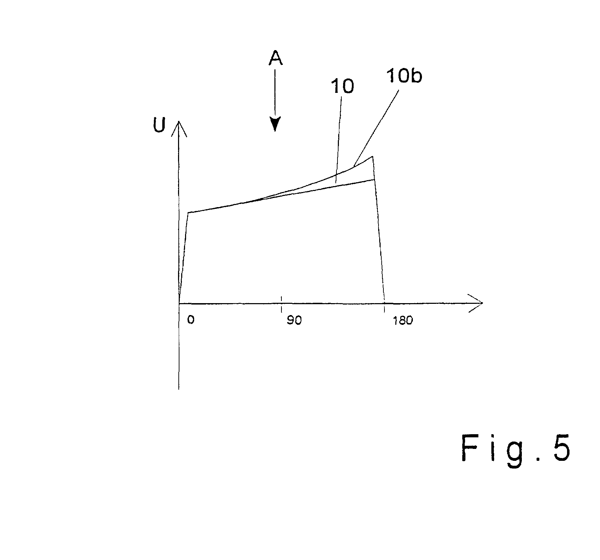

Des weiteren codiert der Spannungsverlauf in sehr exakter Weise, nämlich innerhalb eines Spannungspulses A, eine mögliche Geschwindigkeitsänderung, d.h. Beschleunigung der Drehbewegung des Drehantriebes 1. Ein möglicher Spannungsverlauf ist in Fig. 5 dargestellt. Bei einer beschleunigten Bewegung ändert sich die Kurvenform derart, daß die Kurve nicht im wesentlichen linear verläuft (Spannungsverlauf 10), sondern nichtlinear ansteigt (Spannungsverlauf 10b). Etwa durch Bildung der ersten Ableitung des Spannungssignals ist eine beschleunigte Bewegung eindeutig detektierbar. Im übrigen sei angemerkt, daß in Fig. 5 die Kurvenformen zur Verdeutlichung des verwendeten Prinzips idealisiert dargestellt sind. Tatsächlich weisen die einzelnen Pulse A, wie in Fig. 4a-4c dargestellt, jeweils ein kleines Zwischenmaximum oder -minimum auf. Dies ändert jedoch nichts daran, daß bei einer beschleunigten Bewegung die erste Ableitung des erfaßten Signals sich ändert.

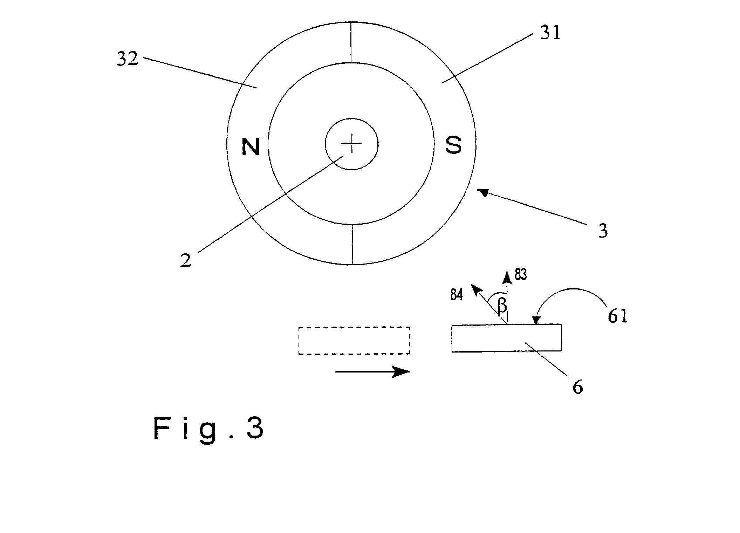

In Figur 3 ist eine weitere Anordnung dargestellt, die die Erfassung des Drehwinkels, der Drehzahl und/oder der Drehrichtung eines Drehantriebes mit nur einem Sensor 6 ermöglicht. Anders als bei der Anordnung der Figur 2 ist der Sensor 6 hier nicht um einen Winkel β aus der Transversallage verkippt, sondern seitlich aus der Transversallage (gestrichelt dargestellt) verschoben. Auch in diesem Fall zeigt der Normalvektor 83 der sensitiven Fläche 61 des Sensors 6 nicht in Richtung der Drehachse 2, sonderen weist einen Winkel zu einem vom Sensorelement 6 auf die Drehachse 2 zeigenden Vektor 84 auf.

Die am Sensor 6 bei einer derartigen Ausrichtung entstehenden Spannungsverläufe sind identisch zu den Spannungsverläufen gemäß der Anordnung der Figur 2, so daß hierzu auf die obengenannten Ausführungen verwiesen wird.

In alternativen Ausführungsformen sind nicht lediglich zwei N-S magnetisierte Sektoren 31, 32, sondern eine größere Anzahl N-S magnetisierter Sektoren gleicher Größe vorgesehen. Entsprechend erhöht sich bei grundsätzlich gleichem Aufbau die Feinheit der Auswertung.

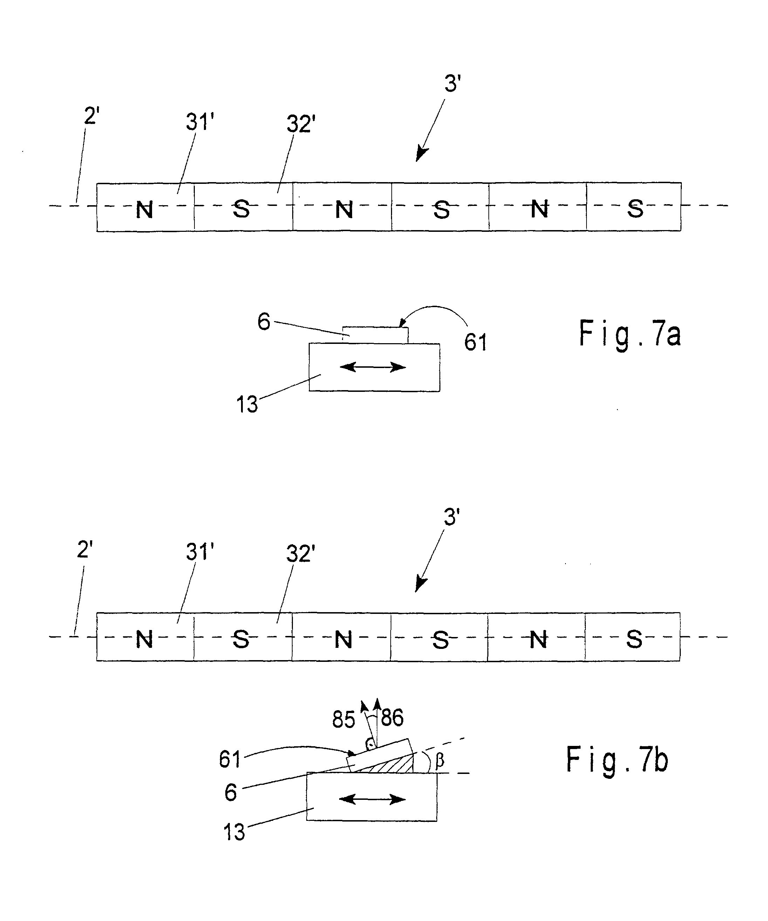

In Figuren 7a, 7b ist eine weitere Variante der Erfindung dargestellt. Fig. 7a zeigt gemäß dem Stand der Technik ein sich in Längsrichtung erstreckendes Signalerzeugungselement 3', das alternierend Segmente 31', 32' unterschiedlicher magnetischer Polarität N, S aufweist. Das Signalerzeugungselement 3' weist eine Längsachse 2' auf, entlang derer die einzelnen Segmente 31', 32' angeordnet sind. Es kann sich bei dem Signalerzeugungselement 3' beispielsweise um einen stabförmigen Magneten, aber auch um ein Magnetband handeln, das alternierend N-S magnetisierte Bereiche aufweist. Das Signalerzeugungselement 3' ist beispielsweise mit einem ersten Aggregatteil (nicht dargestellt) eines Aggregats verbunden.

Dem Signalerzeugungselement 3' ist ein Hallsensor 6 zugeordnet, der wie bzgl. der vorherigen Figuren beschrieben ausgebildet und mit einer Auswerteinheit (nicht dargestellt) verbunden ist. Der Hallsensor 6 ist auf einem schematisch dargestellten zweiten Aggregatteil 13 befestigt, das gegenüber dem Signalerzeugungselement 3' bzw. dem mit diesem verbundenen ersten Aggregatteil translatorisch verschiebbar ist und insbesondere ein Teil einer Fensterhebermechanik oder Schiebedachmechanik in Kraftfahrzeugen darstellt.

Bei einer Relativbewegung parallel zur Längsachse 2' zwischen dem Aggregatteil 13 bzw. Hallsensor 6 und dem Signalerzeugungselement 3' wird im Hallsensor 6 eine Spannung erzeugt, die in Abhängigkeit von den den Hallsensor 6 durchsetzenden magnetischen Feldlinien alternierend positiv oder negativ ist. Durch Auswertung des Spannungsverlaufs läßt sich die Relativgeschwindigkeit zwischen dem Signalerzeugungselement 3' und dem Hallsensor 6 ermitteln. Allerdings ist es aufgrund des symmetrischen Spannungssignals nicht möglich, die Bewegungsrichtung zu bestimmen.

In Fig. 7b ist der Hallsensor 6 erfindungsgemäß in Bezug auf das Signalerzeugungselement 3' bzw. dessen Längsachse 2' derart ausgerichtet, daß der senkrecht auf der sensitiven Fläche 61 des Sensorelements 6 stehende Normalvektor 85 nicht wie bei bekannten Sensoranordnungen senkrecht auf die Längsachse 2' zeigt, sondern vielmehr winklig zu dem senkrecht auf die Längsachse zeigenden (gedachten) Vektor 86 angeordnet ist. Die sensitive Fläche des Hallsensors 6 ist dabei um einen Winkel β gegenüber einer Lage parallel zur Längsachse 2' des Signalerzeugungselements 3' gekippt.

Durch die Anordnung des Hallsensors 6 abweichend von einer Lage parallel zur Längsachse 2' wird bei einer Relativbewegung zwischen dem Signalerzeugungselement 3' und dem Hallsensor 6 am Hallsensor 6 ein Spannungsignal erzeugt, das für jeden Sektor 31', 32' je nach Bewegungsrichtung einen ansteigenden oder abfallenden Spannungsverlauf besitzt.

Daher wird durch das erfaßte Signal neben der Geschwindigkeit der translatorischen Bewegung auch die Bewegungsrichtung codiert.

Auch läßt sich exakt eine Bewegungsumkehr ermitteln, da das Spannungssignal am Punkt der Bewegungsumkehr ein Maximum oder Minimum aufweist und bezüglich des Maximums bzw. Minimums symmetrisch ist. Der Spannungsverlauf entspricht dabei dem in den Fig. 4a bis 4c beschriebenen Spannungsverlauf. Eine exakte Erfassung von Geschwindigkeitsänderungen sogar innerhalb eines Spannungspulses, wie in Bezug auf Fig. 5 beschrieben, ist ebenfalls möglich.

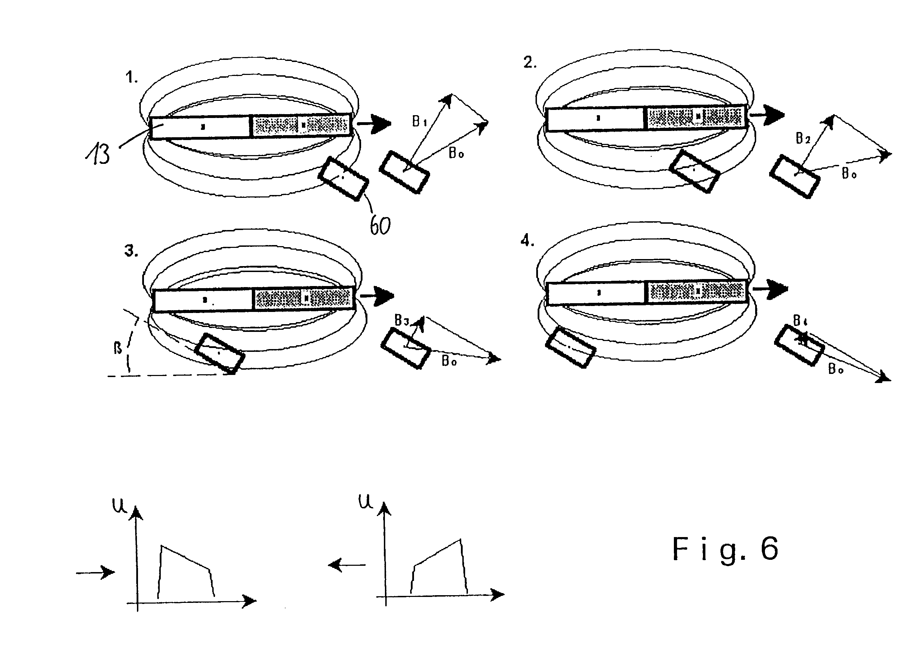

Figur 6 verdeutlicht die Funktionsweise der Erfindung an einem um einen Winkel β gedrehten Hallsensor 60, der sich linear im Magnetfeld eines Stabmagneten 13 bewegt. Spannungserzeugend ist jeweils nur die Normalkomponente B₁, B₂, B₃, B₄ der magnetischen Feldstärke auf dem Halbleiterplättchen des Hallsensors 60. Es wird angenommen, daß die magnetische Feldstärke bzw. die magnetische Flußdichte B₀ konstant ist.

Aufgrund der Schräglage des Hallsensors 60 weist die Normalkomponente B₁, B₂, B₃, B₄ der magnetischen Induktion B bei einer Linearbewegung des Hallsensors 60 im Magnetfeld des Stabmagneten jeweils einen unterschiedlichen Wert auf, so daß ein Kurvenverlauf entsteht, bei dem die Hallspannung U während der Bewegung des Sensors 60 im Magnetfeld nicht konstakt ist, sondern je nach Bewegungsrichtung entweder ansteigt oder abfällt. Das gleiche Resultat ergibt sich bei Anordnung eines Sensors im Feld eines Ringmagneten, wenn sich beide relativ zueinander um eine Bezugsachse bewegen und der Sensor derart zum Ringmagneten angeordnet ist, daß der Normalvektor der sensitiven Fläche des Sensorelements nicht in Richtung der Drehachse des Ringmagneten zeigt. Diesem Gedanken liegt die vorliegende Erfindung zu Grunde.

Die Erfindung beschränkt sich in ihrer Ausführung nicht auf die vorstehend angegebenen Ausführungsbeispiele. Vielmehr sind eine Anzahl von Varianten denkbar, welche von dem erfindungsgemäßen Verfahren auch bei grundsätzlich anders gearteten Ausführungen Gebrauch machen. Diese varianten sind jedoch durch den Wortlant der Patentansprüche eingeschränkt.

## Patentansprüche

1. Anordnung zum Erfassen einer rotatorischen Bewegung zwischen einem mit einem Drehantrieb drehfest verbundenen Signalerzeugungselement (3) mit gleichmäßig angeordneten Segmenten unterschiedlicher magnetischer Politarität und Mitteln zum Erfassen des Magnetfeldes des Signalerzeugungselements (3), die ein analoges, magnetosensitives Sensorelementes (6) aufweisen, wobei das Sensorelement (6) Signalimpulse (A) erzeugt, die zwischen ihren Flanken einen von der Drehrichtung abhängigen, ansteigenden oder abfallenden Signalverlauf besitzen, so daß bei einer Drehrichtungsumkehr sich das Vorzeichen des Signalverlaufs ändert, insbesondere für Fensterheber und Schiebedächer in Kraftfahrzeugen,
**dadurch gekennzeichnet,**
**daß** das Signalerzeugungselement (3) zentrisch auf der Drehachse des Drehantriebes angeordnet ist und das Sensorelement (6) zumindest um eine Achse verkippt ist, die parallel zur Drehachse verläuft, und dabei derart ausgerichtet ist, daß der Normalvektor (81, 83) der sensitiven Fläche (61) einen Winkel (β) zu einem vom Sensorelement (6) senkrecht auf die Drehachse (2) des Signalerzeugungselements (3) zeigenden Vektor (82, 84) aufweist.

2. Anordnung zum Erfassen einer Bewegung zwischen einem Signalerzeugungselement (3'), das aus alternierend angeordneten Segmenten unterschiedlicher magnetischer Polarität besteht, und Mitteln zum Erfassen des Magnetfeldes des Signalerzeugungselements (3'), die ein analoges, magnetosensitives Sensorelement (6) aufweisen, wobei das Sensorelement (6) Signalimpulse (A) erzeugt, die zwischen ihren Flanken einen von der Bewegungsrichtung abhängigen, ansteigenden oder abfallenden Signalverlauf besitzen, so daß bei einer Bewegungsrichtungsumkehr sich das Vorzeichen des Signalverlaufs ändert,
**dadurch gekennzeichnet,**
**daß** die Segmente entlang einer Längsachse angeordnet sind und zum Erfassen einer translatorischen Bewegung das Sensorelement (6) derart ausgerichtet ist, daß der Normalvektor (85) der sensitiven Fläche (61) des Sensorelements (6) einen Winkel (β) zu einem vom Sensorelement (6) senkrecht auf die Längsachse (2') des Signalerzeugungselements (3') zeigenden Vektor (86) aufweist.

3. Anordnung nach Anspruch 1, **dadurch gekennzeichnet, daß** das Sensorelement (6) von einer Transversallage zur Drehachse (2) des Signalerzeugungselements (3) seitlich versetzt ist.

4. Anordnung nach Anspruch 1, **dadurch gekennzeichnet, daß** das Signalerzeugungselement ein Ringmagnet (3) oder eine Mangetscheibe ist.

5. Anordnung nach Anspruch 2, **dadurch gekennzeichnet, daß** das Signalerzeugungselement (3') ein Stabmagnet oder ein Magnetband ist.

6. Anordnung nach mindestens einem der vorangegangenen Ansprüche, **dadurch gekennzeichnet, daß** als magnetosensitives Sensorelement ein Hallsensor (6) verwendet wird, wobei das Halbleiterplättchen (61) des Hallsensors (6) die sensitive Fläche des Sensorelements darstellt und bei senkrechtem Auftreten der Magnetfeldlinien ein maximales Signal erzeugt wird.

7. Anordnung nach mindestens einem der voranstehenden Ansprüche, **dadurch gekennzeichnet, daß** Mittel vorgesehen sind, durch die nach Auswertung des analogen Signals (10, 10a) eine Umwandlung der am Sensorelement (6) auftretenden analogen Spannung (U) in ein digitales Signal stattfindet.

8. Anordnung nach mindestens einem der voranstehenden Ansprüche, **dadurch gekennzeichnet, daß** in das Sensorelement (6) Mittel zum Auswerten des analogen Spannungsverlaufs sowie ein Schwellwertschalter, der eine am Sensor (6) auftretende analoge Spannung in ein digitales Signal umwandelt, integriert sind.

## Claims

1. Arrangement for detecting a rotational movement between a signal-producing element (3) having uniformly arranged segments of different magnetic polarity and connected rotationally secured to a rotary drive, and means for detecting the magnetic field of the signal-producing element (3) which have an analogue magneto-sensitive sensor element (6), wherein the sensor element (6) produces signal pulses (A) which have between their flanks a signal path which rises or falls dependent on the rotary direction so that when the direction of rotation is reversed the sign of the signal path is changed, particularly for window lifters and sliding roofs in motor vehicles,
**characterised in that**
the signal-producing element (3) is mounted centrally on the rotational axis of the rotary drive and the sensor element (6) is inclined at least about an axis which runs parallel to the axis of rotation, and is aligned so that the normal vector (81, 83) of the sensitive surface (61) makes an angle (β) to a vector (82, 84) which points from the sensor element (6) perpendicular to the axis of rotation (2) of the signal-producing element (3).

2. Arrangement for detecting a movement between a signal-producing element (3') which consists of alternately arranged segments of different magnetic polarity, and means for detecting the magnetic field of the signal producing element (3') which have an analogue magneto-sensitive sensor element (6) wherein the sensor element (6) produces signal pulses (A) which have between their flanks a signal path which rises or falls dependent on the movement direction so that when the direction of movement is reversed the sign of the signal path changes,
**characterised in that**
the segments are mounted along a longitudinal axis and in order to detect a translational movement the sensor element (6) is aligned so that the normal vector (85) of the sensitive face (61) of the sensor element (6) makes an angle (β) to a vector (86) pointing from the sensor element (6) perpendicular to the longitudinal axis (2') of the signal-producing element (3').

3. Arrangement according to claim 1 **characterised in that** the sensor element (6) is offset laterally from a position transverse to the axis of rotation (2) of the signal-producing element (3).

4. Arrangement according to claim 1 **characterised in that** the signal-producing element is a ring magnet (3) or a magnetic disc.

5. Arrangement according to claim 2 **characterised in that** the signal-producing element (3') is a rod magnet or a magnetic strip.

6. Arrangement according to at least one of the preceding claims **characterised in that** a Hall sensor (6) is used as a magneto-sensitive sensor element wherein the semiconductor plates (61) of the Hall sensor (6) represent the sensitive surface of the sensor element and a maximum signal is produced when the magnetic field lines appear vertically.

7. Arrangement according to at least one of the preceding claims **characterised in that** means are provided through which after evaluating the analogue signal (10, 10a) the analogue voltage (U) appearing at the sensor element (6) is converted into a digital signal.

8. Arrangement according to at least one of the preceding claims **characterised in that** means are integrated in the sensor element (6) for evaluating the analogue voltage path as well as a threshold value switch which converts an analogue voltage appearing at the sensor (6) into a digital signal.

## Revendications

1. Dispositif pour détecter un mouvement de rotation entre un élément (3) de production de signaux, qui est relié solidairement en rotation à un dispositif d'entraînement en rotation et comporte des segments disposés de façon uniforme et possédant des polarités magnétiques différentes et des moyens pour détecter le champ magnétique de l'élément (3) de production de signaux, qui possèdent un élément de détection magnétosensible analogique (6), l'élément de détection (6) produisant des impulsions de signal (A), qui possèdent entre leurs flancs une courbe de signal qui augmente ou diminue et dépend du sens de rotation, de sorte que, dans le cas d'une inversion du sens de rotation, le signe de la courbe du signal change, notamment pour des lève-vitres et des toits coulissants dans des véhicules automobiles,
**caractérisé en ce**
**que** l'élément (3) de production de signaux est disposé d'une manière centrée sur l'axe de rotation du dispositif d'entraînement en rotation et que l'élément de détection (6) bascule au moins autour d'un axe qui est parallèle à l'axe de rotation, et est orienté de telle sorte que le vecteur (81,83) de la normale à la surface sensible (61) fait un angle (β) par rapport à un vecteur (82,84), qui s'étend depuis l'élément de détection (6) perpendiculairement à l'axe de rotation (2) de l'élément (3) de production de signaux.

2. Dispositif pour détecter un déplacement entre un élément (3') de production de signaux, qui est constitué par des segments disposés d'une manière alternée et possédant des polarités magnétiques différentes, et des moyens pour détecter le champ magnétique de l'élément (3') de production de signaux, qui possèdent un élément de détection analogique magnétosensible analogique (6), l'élément de détection (6) produisant des impulsions de signal (A) qui possèdent entre leurs flancs une courbe de signal qui augmente ou diminue et est fonction du sens de déplacement, de sorte que dans le cas d'une inversion du sens de déplacement, le signe de la courbe du signal change,
**caractérisé en ce**
**que** les segments sont disposés le long d'un axe longitudinal et que l'élément de détection (6) est orienté pour détecter un déplacement de translation de telle sorte que le vecteur (85) de la normale à la surface sensible (61) de l'élément de détection (6) fait un angle (β) par rapport au vecteur (86) qui s'étend depuis l'élément de détection (6) perpendiculairement à l'axe longitudinal (2') de l'élément (3') de production de signaux.

3. Dispositif selon la revendication 1, **caractérisé en ce que** l'élément de détection (6) est décalé latéralement par rapport à une position transversale par rapport à l'axe de rotation (2) de l'élément (3) de production de signaux.

4. Dispositif selon la revendication 1, **caractérisé en ce que** l'élément de production de signaux est un élément annulaire (3) ou un disque magnétique.

5. Dispositif selon la revendication 2, **caractérisé en ce que** l'élément (3') de production de signaux est un barreau magnétique ou une bande magnétique.

6. Dispositif selon au moins l'une des revendications précédentes, **caractérisé en ce qu'**on utilise comme élément de détection magnétosensible un capteur à effet Hall (6), la plaquette à semiconducteurs (62) du capteur à effet Hall (6) représentant la surface sensible de l'élément de détection et produisant un signal maximum lorsqu'elle rencontre perpendiculairement les lignes de champ magnétique.

7. Dispositif selon au moins l'une des revendications précédentes, **caractérisé en ce qu'**il est prévu des moyens à l'aide desquels est réalisée, après l'évaluation du signal analogique (10,10a), une conversion de la tension analogique (U) apparaissant dans l'élément de détection (6) en un signal numérique.

8. Dispositif selon au moins l'une des revendications précédentes, **caractérisé en ce que** dans l'élément de détection (6) sont intégrés des moyens servant à évaluer l'allure analogique de la tension ainsi qu'un commutateur à valeur de seuil, qui convertit une tension analogique apparaissant dans l'élément de détection (6), en un signal numérique.
